# EUROPEAN PATENT APPLICATION

(11) **EP 4 831 351 A1**
(43) Date of publication of application: **28.10.2026**
(21) Application number: 24907798.3
(22) Date of filing: 12.11.2024
(51) Int. Cl.: C25B 11/091, C25B 1/04, C25B 9/19, C25D 11/04, C25D 21/12, B01J 35/45, B01J 35/00, B01J 37/34, B01J 23/38, B82Y 40/00

(54) **CATALYST FOR OXYGEN EVOLUTION REACTION OF WATER ELECTROLYSIS CELL, MANUFACTURING METHOD THEREFOR, MEMBRANE-ELECTRODE ASSEMBLY FOR WATER ELECTROLYSIS CELL INCLUDING SAME, AND WATER ELECTROLYSIS CELL**

(30) Priority: 22.12.2023 KR 20230190211; 07.11.2024 KR 20240157362
(71) Applicant: Kolon Industries, Inc., Seoul 07793 (KR)
(72) Inventor: KIM, Jung Ho, Seoul 07793 (KR); KIM, Jun Young, Seoul 07793 (KR); LEE, Ju Sung, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/017872
(87) International publication number: WO 2025/135513

(57) **Abstract**

The present disclosure relates to a catalyst for an oxygen evolution reaction of a water electrolysis cell, a manufacturing method therefor, a membrane-electrode assembly for a water electrolysis cell including same, and a water electrolysis cell. The catalyst for the oxygen evolution reaction of a water electrolysis cell includes a heterogeneous noble metal composite which has a nanowire shape and includes different first and second noble metal oxides in a node structure, whereby the catalyst can reduce the amount of the noble metals used while improving performance and can enhance performance and durability depending on the types and lengths of the noble metals forming the heterogeneous noble metal composite.

## Description

### [Technical Field]

The present disclosure relates to a catalyst for an oxygen evolution reaction of a water electrolysis cell and a method of manufacturing the same, and a membrane-electrode assembly for a water electrolysis cell and a water electrolysis cell including the same, and more particularly, to a catalyst for an oxygen evolution reaction of a water electrolysis cell and a method of manufacturing the same, and a membrane-electrode assembly for a water electrolysis cell and a water electrolysis cell including the same, in which, by including a heterogeneous noble metal composite having a nanowire shape and including a first noble metal oxide and a second noble metal oxide different from each other, performance is improved while reducing an amount of a noble metal used, and performance and durability according to a type and a length of a noble metal constituting the heterogeneous noble metal composite are improved.

The present disclosure relates to a result of a project (Project Unique Number: 20022451) carried out with the support of the Materials and Components Technology Development Program of the Ministry of Trade, Industry and Energy and the Korea Evaluation Institute of Industrial Technology (KEIT).

### [Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

This technology relates to a catalyst for water electrolysis, particularly a catalyst for an oxygen evolution electrode of polymer electrolyte membrane (PEM) water electrolysis. Iridium black and iridium oxide powder have been used as catalysts for an oxygen evolution reaction in conventional PEM water electrolysis oxygen evolution electrodes; however, improvements regarding their low dispersibility, low electrical conductivity, and instability are required.

In addition, there is a need to reduce an amount of iridium used due to an high cost of an iridium raw material.

### [Disclosure]

### [Technical Problem]

According to an embodiment, provided is a catalyst for an oxygen evolution reaction of a water electrolysis cell, comprising a heterogeneous noble metal composite having a nanowire shape and including first and second noble metal oxides different from each other, whereby the amount of the noble metal used is reduced, performance is improved, and performance and durability according to a type and a length of noble metal constituting the heterogeneous noble metal composite are improved.

According to another embodiment, provided is a method of manufacturing the catalyst for an oxygen evolution reaction of a water electrolysis cell.

According to another embodiment, there is provided a membrane-electrode assembly including an oxygen evolution electrode that includes a catalyst for an oxygen evolution reaction, and a water electrolysis cell including the same.

### [Technical Solution]

A catalyst for an oxygen evolution reaction of a water electrolysis cell according to an embodiment comprises a heterogeneous noble metal composite including a first noble metal oxide and a second noble metal oxide different from the first noble metal oxide, and the heterogeneous noble metal composite has a nanowire shape.

The first noble metal oxide may be IrOₓ (x is an integer of 1 to 3).

The second noble metal oxide may be MOₓ (wherein M includes Ru, Pt, Sn, Se, Sb, Ta, Te, Nb, W, Zn, Au, or a combination thereof, and x is an integer of 1 to 3).

A length of the nanowire may be in a range of 100 nm to 1,000 nm.

The first noble metal oxide may be included in a range of 10 wt% to 90 wt% based on a total weight of the heterogeneous noble metal composite.

In the heterogeneous noble metal composite, a weight ratio of the first noble metal oxide to the second noble metal oxide may be in a range of 1:9 to 9:1.

The heterogeneous noble metal composite comprises a first noble metal oxide layer including the first noble metal oxide, and a second noble metal oxide layer including the second noble metal oxide.

In the heterogeneous noble metal composite, the first noble metal oxide layer and the second noble metal oxide layer may be alternately disposed in a longitudinal direction of the nanowire.

The first noble metal oxide layer and the second noble metal oxide layer are each independently a minimum repeating unit, and the heterogeneous noble metal composite may have greater than or equal to 2 repeating units of the first noble metal oxide layer, and have greater than or equal to 1 repeating unit of the second noble metal oxide layer.

The heterogeneous noble metal composite may comprise 2 to 10 first noble metal oxide layers, and comprise 1 to 9 second noble metal oxide layers.

A length of the first noble metal oxide layer may be in a range of greater than or equal to 10 nm and less than 1,000 nm, and a length of the second noble metal oxide layer may be in a range of greater than or equal to 10 nm and less than 1,000 nm.

A ratio of the length of the first noble metal oxide layer to the length of the second noble metal oxide layer may be in a range of 1:0.1 to 1:10.

According to another embodiment, a method of manufacturing a catalyst for an oxygen evolution reaction of a water electrolysis cell comprises: introducing a precursor of a first noble metal oxide to fill a portion of a template and performing an electroplating process (S1); and introducing a precursor of a second noble metal oxide different from the precursor of the first noble metal oxide to fill a portion of the template and performing an electroplating process (S2), wherein the step S1, the step S2, or both of the two steps are repeated n times (n is a natural number greater than or equal to 1).

The template is an AAO membrane (anodic aluminum oxide membrane) including a substrate and a plurality of pores penetrating the substrate in a thickness direction, and the precursor of the first noble metal oxide and the precursor of the second noble metal oxide may be alternately filled into the pores.

The electroplating process may be performed under a current in a range of 0.05 mA/cm² to 2.0 mA/cm² for 10 minutes to 300 minutes.

The method may further comprise: after repeating the step S1 to the step S2 n times (n is a natural number greater than or equal to 1), removing the template (S3); and performing a heat treatment process to form a heterogeneous noble metal composite including a first noble metal oxide and a second noble metal oxide different from the first noble metal oxide (S4).

The step S3 may use an alkaline solution.

A membrane-electrode assembly for a water electrolysis cell according to another embodiment comprises: a polymer electrolyte membrane; an oxygen evolution electrode positioned on one surface of the polymer electrolyte membrane and including the catalyst for an oxygen evolution reaction; and a hydrogen evolution electrode positioned on the other surface of the polymer electrolyte membrane.

In the membrane-electrode assembly, a current density measured at 1.7 V under conditions of a cell temperature of 80°C, a water temperature of 80°C, and a flow rate of 5 ml/min may be greater than or equal to 2.0 A/cm².

A water electrolysis cell according to another embodiment comprises the membrane-electrode assembly.

### [Advantageous Effects]

A catalyst for an oxygen evolution reaction of a water electrolysis cell according to an embodiment comprises a heterogeneous noble metal composite having a nanowire shape and including first and second noble metal oxides different from each other in a node structure, thereby improving performance while reducing an amount of a noble metal used, and performance and durability according to a type and a length of a noble metal constituting the heterogeneous noble metal composite may be improved.

### [Brief Description Of The Drawings]

FIG. 1 is a schematic diagram illustrating a manufacturing process of a catalyst for an oxygen evolution reaction of a water electrolysis cell according to an embodiment.
FIGS. 2 and 3 are optical microscope images of catalysts for an oxygen evolution reaction of a water electrolysis cell manufactured in Examples 1-1 and 2-1, respectively.
FIG. 4 is a scanning electron microscope (SEM) image of a catalyst for an oxygen evolution reaction of a water electrolysis cell manufactured in Comparative Example 1.
FIG. 5 is a schematic diagram illustrating a membrane-electrode assembly (MEA) for a water electrolysis cell according to an embodiment.
FIG. 6 is a graph showing the results of evaluating I-V characteristics of membrane-electrode assemblies including catalysts for an oxygen evolution reaction of a water electrolysis cell manufactured in Examples 1-1, 2-1, 3, and 4 and Comparative Example 1.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" refers to a mixture, a laminate, a composite, a copolymer, an alloy, a blend, a reaction product, or the like of components.

In the present specification, terms such as "include," "comprise" or "have" are intended to designate the presence of implemented features, numbers, steps, components, or a combination thereof, and it should be understood that they do not preclude the possibility of the presence or addition of one or more other features, numbers, steps, components, or combinations thereof.

In the present specification, terms are used only for the purpose of distinguishing one component from another component. A singular expression includes a plural expression unless the context clearly indicates otherwise.

Unless otherwise defined in the present specification, "substitution" means that a hydrogen atom in a compound is substituted with a substituent including a halogen atom (F, Cl, Br or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, phosphoric acid or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, or a combination thereof.

Unless otherwise defined in the present specification, an "alkyl group" refers to a linear or branched, saturated, monovalent hydrocarbon group (for example, a methyl group, an ethyl group, a propyl group, an isobutyl group, a sec-butyl group, a tert-butyl group, a pentyl group, an iso-amyl group, a hexyl group, and the like).

Unless otherwise defined in the present specification, an "alkenyl group" refers to a linear or branched, unsaturated, monovalent hydrocarbon group having at least one carbon-carbon double bond (for example, an ethenyl group).

Unless otherwise defined in the present specification, an "alkoxy group" refers to an alkyl group connected through oxygen, and refers to, for example, a methoxy group, an ethoxy group, and a sec-butyloxy group.

In the present specification, those denoted by S1, S2, S3, ..., Sn, and the like refer to each step for convenience, and do not mean that each step is performed in a time-series order or that another additional step is not included between the respective steps.

### 1. Catalyst for an oxygen evolution reaction of a water electrolysis cell

According to an embodiment, a catalyst for an oxygen evolution reaction of a water electrolysis cell comprises a heterogeneous noble metal composite including a first noble metal oxide and a second noble metal oxide different from the first noble metal oxide, and the heterogeneous noble metal composite has a nanowire shape.

In the present specification, "first" and "second" are only indicated as "first" and "second", respectively, to identify different types of noble metal oxides, and do not represent a priority between the noble metal oxides.

The performance and durability of the catalyst for an oxygen evolution reaction of a water electrolysis cell may be improved depending on a length of the nanowire and types of the first noble metal oxide and the second noble metal oxide.

The length of the nanowire may be within a predetermined range. The length of the nanowire may be measured by capturing an image of the nanowire using a scanning electron microscope (SEM) and measuring the length thereof from the image.

For example, a lower limit of the length of the nanowire may be about 100 nm, 200 nm, 300 nm, 400 nm, 500 nm, 600 nm, 700 nm, or 800 nm, and an upper limit thereof may be about 1,000 nm, 900 nm, 800 nm, 700 nm, 600 nm, 500 nm, 400 nm, or 300 nm.

The length of the nanowire may be greater than or equal to, or greater than any one of the above-described lower limits; may be less than or equal to, or less than any one of the above-described upper limits; or may have a range of greater than or equal to, or greater than any one of the above-described lower limits and less than or equal to, or less than any one of the above-described upper limits.

In addition, the first noble metal oxide may be an iridium oxide that is IrOₓ (wherein x is an integer of 1 to 3).

The second noble metal oxide may be a noble metal oxide that is not an iridium oxide, which is the first noble metal oxide. For example, the second noble metal oxide may be MOₓ (wherein M includes Ru, Pt, Sn, Se, Sb, Ta, Te, Nb, W, Zn, Au, or a combination thereof, and x is an integer of 1 to 3).

By including the heterogeneous noble metal composite, a catalyst for an oxygen evolution reaction of a water electrolysis cell may be provided, which has improved performance and durability while reducing an amount of a noble metal, particularly iridium, used.

The first noble metal oxide may be included within a predetermined range based on a total weight of the heterogeneous noble metal composite of the water electrolysis cell.

For example, a lower limit of a content of the first noble metal oxide may be about 10 wt%, 20 wt%, 30 wt%, 40 wt%, 50 wt%, 60 wt%, 70 wt%, or 80 wt%, and an upper limit thereof may be about 90 wt%, 80 wt%, 70 wt%, 60 wt%, 50 wt%, 40 wt%, 30 wt%, or 20 wt%.

The first noble metal oxide may have a range of greater than or equal to, or greater than any one of the above-described lower limits; less than or equal to, or less than any one of the above-described upper limits; or greater than or equal to, or greater than any one of the above-described lower limits and less than or equal to, or less than any one of the above-described upper limits, each based on the total weight of the heterogeneous noble metal composite.

In the heterogeneous noble metal composite, a weight ratio of the first noble metal oxide to the second noble metal oxide may be within a range of 1:9 to 9:1.

For example, the weight ratio of the first noble metal oxide to the second noble metal oxide may be 1:9, 2:8, 3:7, 4:6, 5:5, 6:4, 7:3, 8:2, or 9:1.

For example, the heterogeneous noble metal composite may comprise a first noble metal oxide layer including the first noble metal oxide, and a second noble metal oxide layer including the second noble metal oxide. The first noble metal oxide layer may not include other components besides the first noble metal oxide. That is, the first noble metal oxide layer may consist of the first noble metal oxide. In addition, the second noble metal oxide layer may not include other components besides the second noble metal oxide. That is, the second noble metal oxide layer may consist of the second noble metal oxide.

The heterogeneous noble metal composite may be one in which the first noble metal oxide layer and the second noble metal oxide layer are alternately disposed in a longitudinal direction of the nanowire. The meaning of the first noble metal oxide layer and the second noble metal oxide layer being alternately disposed may mean an alternately disposed structure, for example, such as a first noble metal oxide layer - a second noble metal oxide layer - a first noble metal oxide layer.

Here, the first noble metal oxide layer and the second noble metal oxide layer are each independently in a layer form and are a minimum repeating unit in the heterogeneous noble metal composite, and the heterogeneous noble metal composite may have greater than or equal to 2 repeating units of the first noble metal oxide layer, and have greater than or equal to 1 repeating unit of the second noble metal oxide layer.

Hereinafter, the first noble metal oxide layer and the second noble metal oxide layer, which are a minimum repeating unit in the heterogeneous noble metal composite, will be described in detail. It should be understood that hereinafter, descriptions of the first noble metal oxide layer and the second noble metal oxide layer are based on the minimum repeating unit, and are not descriptions of the entirety of the first noble metal oxide layer, or the entirety of the second noble metal oxide layer in the heterogeneous noble metal composite.

For example, in the heterogeneous noble metal composite, a lower limit of the number of the first noble metal oxide layers may be about 2, 3, 4, 5, 6, 7, 8, or 9, and an upper limit thereof may be about 10, 9, 8, 7, 6, 5, 4, or 3.

In addition, in the heterogeneous noble metal composite, a lower limit of the number of the second noble metal oxide layers may be about 1, 2, 3, 4, 5, 6, 7, 8, or 9, and an upper limit thereof may be about 9, 8, 7, 6, 5, 4, 3, or 2.

The number of the first noble metal oxide layers and the number of the second noble metal oxide layers may each be greater than or equal to, or greater than any one of the above-described lower limits; be less than or equal to, or less than any one of the above-described upper limits; or have a range of greater than or equal to, or greater than any one of the above-described lower limits, and less than or equal to, or less than any one of the above-described upper limits.

The length of the first noble metal oxide layer or the length of the second noble metal oxide layer may be within a predetermined range. The length of the first noble metal oxide layer or the length of the second noble metal oxide layer may be measured by imaging the nanowire using a scanning electron microscope (SEM).

For example, a lower limit of the length of the first noble metal oxide layer or the length of the second noble metal oxide layer may be about 10 nm, 20 nm, 30 nm, 40 nm, 50 nm, 60 nm, 70 nm, or 80 nm, and an upper limit thereof may be about 100 nm, 90 nm, 80 nm, 70 nm, 60 nm, 50 nm, 40 nm, or 30 nm.

The length of the first noble metal oxide layer or the length of the second noble metal oxide layer may be greater than or equal to, or greater than any one of the above-described lower limits; be less than or equal to, or less than any one of the above-described upper limits; or have a range of greater than or equal to, or greater than any one of the above-described lower limits, and less than or equal to, or less than any one of the above-described upper limits. In this case, it may be premised that the length of the first noble metal oxide layer or the length of the second noble metal oxide layer is less than 100.

In this case, the ratio of the length of the first noble metal oxide layer to the length of the second noble metal oxide layer may be 1 : 0.1, 1 : 0.2, 1 : 0.3, 1 : 0.4, 1 : 0.5, 1 : 0.6, 1 : 0.7, 1 : 0.8, 1 : 0.9, 1 : 1, 1 : 2, 1 : 3, 1 : 4, 1 : 5, 1 : 6, 1 : 7, 1 : 8, 1 : 9, or 1 : 10.

A catalyst for an oxygen evolution reaction of a water electrolysis cell may be provided, which comprises the first noble metal oxide and the second noble metal oxide within the above range, and has improved performance and durability.

The catalyst for an oxygen evolution reaction of a water electrolysis cell may achieve the object of the present disclosure when including the above-described heterogeneous noble metal composite, and may further comprise other components as long as it comprises the heterogeneous noble metal composite.

### 2. Method of manufacturing a catalyst for an oxygen evolution reaction of a water electrolysis cell

According to an embodiment, a method of manufacturing a catalyst for an oxygen evolution reaction of a water electrolysis cell comprises introducing a precursor of a first noble metal oxide to fill a portion of a template and performing an electroplating process (S1); and introducing a precursor of a second noble metal oxide different from the precursor of the first noble metal oxide to fill a portion of the template and performing an electroplating process (S2), and repeats the step S1 to the step S2 n times (n is a natural number greater than or equal to 1).

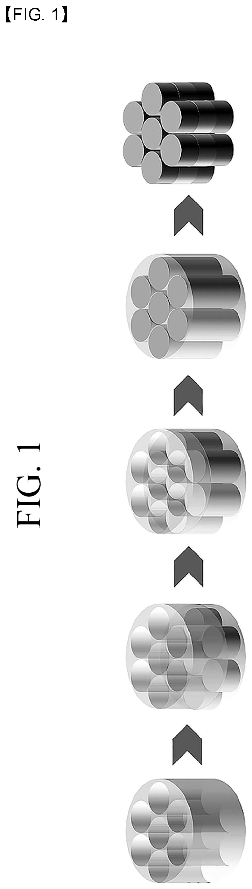

The method of manufacturing a catalyst for an oxygen evolution reaction of a water electrolysis cell will be described with reference to FIG. 1.

The type of the template is not limited as long as it may form a nanowire. For example, the template may comprise a polycarbonate membrane, a nylon membrane, a cellulose membrane, or an AAO membrane (anodic aluminum oxide membrane).

According to an embodiment, the template may be an AAO membrane (anodic aluminum oxide membrane).

As illustrated in FIG. 1, the AAO membrane may comprise a substrate and a plurality of pores penetrating the substrate in a thickness direction. In FIG. 1, only seven pores are illustrated, but the number of the pores may be adjusted as necessary.

A diameter and a length of the pore may be within a predetermined range. The length of the pore is equal to a thickness of the AAO membrane. The diameter and length of the pore were measured by imaging the AAO membrane using a scanning electron microscope (SEM) and measuring the diameter and length of the pores of the AAO membrane from the resulting image.

A lower limit of the diameter of the pore may be about 10 nm or 15 nm, and an upper limit of the diameter may be about 200 nm or 190 nm. The diameter of the pore may have a range of greater than or equal to, or greater than any one of the described lower limits; less than or equal to, or less than any one of the described upper limits; or greater than or equal to, or greater than any one of the described lower limits and less than or equal to, or less than any one of the described upper limits.

A lower limit of the length of the pore may be about 100 nm, 200 nm, 300 nm, 400 nm, 500 nm, 600 nm, 700 nm, 800 nm, or 900 nm, and an upper limit of the length may be about 1,500 nm, 1,400 nm, 1,300 nm, 1,200 nm, 1,100 nm, 1,000 nm, or 900 nm.

A process of alternately introducing the precursor of the first noble metal oxide and the precursor of the second noble metal oxide into the respective pores of the AAO membrane is illustrated in FIG. 1. That is, the precursor of the first noble metal oxide and the precursor of the second noble metal oxide are alternately stacked in any one pore of the AAO membrane, and through this, as will be described later, a catalyst for an oxygen evolution reaction of a water electrolysis cell having a structure in which the first noble metal oxide and the second noble metal oxide are alternately arranged in a longitudinal direction of the nanowire may be manufactured. The precursor of the first noble metal oxide refers to a material in a stage prior to the first noble metal oxide that is a final product. As described above, "first" and "second" are merely denoted as "first" and "second", respectively, to identify precursors of different kinds of noble metal oxides, and do not indicate a priority between the precursors of the noble metal oxides.

The precursor of the first noble metal oxide is not limited in kind as long as it may generate iridium oxide.

For example, the precursor of the first noble metal oxide may comprise iridium (Ir) chloride, iridium acetate, iridium aminate, or a combination thereof.

According to an embodiment, a precursor of a first noble metal oxide may be iridium (Ir) chloride, for example, IrCl₄.

The precursor of the second noble metal oxide refers to a material in a stage prior to the second noble metal oxide that is a final product. The precursor of the second noble metal oxide and the precursor of the first noble metal oxide are different from each other.

The precursor of the second noble metal oxide is not limited in kind as long as it generates an oxide of a noble metal other than iridium.

The noble metal other than iridium may be Ru, Pt, Sn, Se, Sb, Ta, Te, Nb, W, Zn, Au, or a combination thereof.

The precursor of the second noble metal oxide may comprise a chloride, an acetate, an aminate, or a combination thereof of a noble metal including Ru, Pt, Sn, Se, Sb, Ta, Te, Nb, W, Zn, Au, or a combination thereof.

For example, the precursor of the second noble metal oxide may be a chloride of a noble metal including Ru, Pt, Sn, Se, Sb, Ta, Te, Nb, W, Zn, Au, or a combination thereof, for example, RuCl₄, SnCl₄, NbCl₄, or WCl₄.

According to an embodiment, a catalyst for an oxygen evolution reaction of a water electrolysis cell may comprise the precursor of the second noble metal oxide different from the precursor of the first noble metal oxide, thereby reducing an amount of a noble metal, particularly iridium (Ir), used, and accordingly improving performance. In addition, according to the Examples and Comparative Examples of the present disclosure, it may be confirmed that performance is improved when different heterogeneous metals are used compared to when a single metal is used.

In the step S1, a weak reducing agent may be further introduced together with the precursor of the first noble metal oxide, and/or in the step S2, a weak reducing agent may be further introduced together with the precursor of the second noble metal oxide.

The weak reducing agent may comprise formaldehyde, formic acid, oxalic acid, ascorbic acid, citric acid, urea, ethylenediamine, hexamethylenetetramine, or a combination thereof.

An input content of the weak reducing agent in the step S1 may be appropriately adjusted. For example, in the step S1, the weak reducing agent may be included in parts by weight within a predetermined range based on 100 parts by weight of the precursor of the first noble metal oxide.

A lower limit of the content of the weak reducing agent based on 100 parts by weight of the precursor of the first noble metal oxide may be about 200 parts by weight, 210 parts by weight, 220 parts by weight, 230 parts by weight, 240 parts by weight, 250 parts by weight, 260 parts by weight, 270 parts by weight, 280 parts by weight, or 285 parts by weight, and an upper limit thereof may be about 400 parts by weight, 390 parts by weight, 380 parts by weight, 370 parts by weight, 360 parts by weight, 350 parts by weight, 340 parts by weight, 330 parts by weight, 320 parts by weight, 310 parts by weight, 300 parts by weight, 290 parts by weight, or 285 parts by weight.

The content of the weak reducing agent based on 100 parts by weight of the precursor of the first noble metal oxide may be greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

Also in the step S2, the input content of the weak reducing agent may be appropriately adjusted. For example, in the step S2, the weak reducing agent may be included in parts by weight within a predetermined range based on 100 parts by weight of the precursor of the second noble metal oxide.

A lower limit of the content of the weak reducing agent based on 100 parts by weight of the precursor of the second noble metal oxide may be about 200 parts by weight, 210 parts by weight, 220 parts by weight, 230 parts by weight, 240 parts by weight, 250 parts by weight, 260 parts by weight, 270 parts by weight, 280 parts by weight, or 285 parts by weight, and an upper limit thereof may be about 400 parts by weight, 390 parts by weight, 380 parts by weight, 370 parts by weight, 360 parts by weight, 350 parts by weight, 340 parts by weight, 330 parts by weight, 320 parts by weight, 310 parts by weight, 300 parts by weight, 290 parts by weight, or 285 parts by weight.

The content of the weak reducing agent based on 100 parts by weight of the precursor of the second noble metal oxide may be greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

By performing the electroplating process on the precursor of the first noble metal oxide and the precursor of the second noble metal oxide in the step S1 and the step S2, the first noble metal oxide and the second noble metal oxide may be formed, respectively.

The electroplating process may be performed by a method known in the art.

According to an embodiment, the electroplating process may be performed under a current within a predetermined range for a time within a predetermined range.

For example, a lower limit of the current may be about 0.05 mA/cm², 0.1 mA/cm², 0.15 mA/cm², or 0.2 mA/cm², and an upper limit thereof may be about 2.0 mA/cm², 1.5 mA/cm², 1.0 mA/cm², 0.5 mA/cm², 0.4 mA/cm², 0.3 mA/cm², or 0.2 mA/cm².

In addition, a lower limit of the time may be about 10 minutes, 20 minutes, 30 minutes, 40 minutes, 50 minutes, 60 minutes, 70 minutes, 80 minutes, 90 minutes, 100 minutes, 110 minutes, 120 minutes, 130 minutes, 140 minutes, 150 minutes, 160 minutes, 170 minutes, 180 minutes, 190 minutes, 200 minutes, 210 minutes, 220 minutes, 230 minutes, 240 minutes, 250 minutes, 260 minutes, or 270 minutes, and an upper limit thereof may be about 300 minutes, 290 minutes, 280 minutes, 270 minutes, 260 minutes, 250 minutes, 240 minutes, 230 minutes, 220 minutes, 210 minutes, 200 minutes, 190 minutes, 180 minutes, 170 minutes, 160 minutes, 150 minutes, 140 minutes, 130 minutes, 120 minutes, 110 minutes, 100 minutes, 90 minutes, 80 minutes, 70 minutes, 60 minutes, 50 minutes, 40 minutes, 30 minutes, or 20 minutes.

The current and the time of the electroplating process may each be greater than or equal to, or greater than any one of the described lower limits; less than or equal to, or less than any one of the described upper limits; or may have a range of greater than or equal to, or greater than any one of the described lower limits and less than or equal to, or less than any one of the described upper limits.

Amounts of the first noble metal oxide and the second noble metal oxide that are formed may vary depending on the time of the electroplating process. For example, as the time of the electroplating process becomes longer, the amounts of the first and second noble metal oxides increase, and as the time of the electroplating process becomes shorter, the amounts of the first and second noble metal oxides decrease. Therefore, to form the appropriate amounts of the noble metal oxides, it is necessary to appropriately adjust the time of the electroplating process within the above range.

The electroplating process may be performed under a pH within a predetermined range. For example, the pH may be in a range of 8 to 11. When the pH is within the above range, the precursor of the noble metal oxide may be stably plated and grown. Accordingly, in the step S1 and the step S2, after adding the precursor of the first noble metal oxide and the precursor of the second noble metal oxide to fill a portion of the template, and before performing the electroplating process, a basic compound may be added such that the pH value is within the range.

The basic compound refers to a compound having chemical basicity. The basic compound may serve as a pH adjusting agent adjusting pH such that the pH value becomes a value within the range.

The kind of the basic compound is not limited as long as it is a material that may accept hydrogen ions (H⁺) or release hydroxide ions (OH⁻).

The basic compound according to an embodiment may be a carbonate metal salt. For example, the carbonate metal salt may comprise sodium carbonate (Na₂CO₃), sodium bicarbonate (NaHCO₃), magnesium carbonate (MgCO₃), calcium carbonate (CaCO₃), potassium carbonate (K₂CO₃), or a combination thereof.

By including the heterogeneous metal composite manufactured according to the above-described method, the object according to the present disclosure may be achieved.

The method of manufacturing a catalyst for an oxygen evolution reaction of a water electrolysis cell may further comprise, before the step S1, a step (S0) of depositing an electrode including gold (Au), copper (Cu), sodium (Na), aluminum (Al), silver (Ag), or a combination thereof on one surface of the template.

By depositing the electrode on one surface of the template, a current may flow through the deposition surface, allowing the first noble metal oxide and the second noble metal oxide to be alternately disposed and deposited from where the electrode is deposited.

In addition, the method of manufacturing a catalyst for an oxygen evolution reaction of a water electrolysis cell may further comprise: after the step S1, a step (S1') of removing an unreacted material of the precursor of the first noble metal oxide; and after the step S2, a step (S2') of removing an unreacted material of the precursor of the second noble metal oxide.

The unreacted material refers to a material remaining as the precursor of the first noble metal oxide and the precursor of the second noble metal oxide without forming the first noble metal oxide and the second noble metal oxide, after the precursor of the first noble metal oxide and the precursor of the second noble metal oxide undergo the electroplating process to form the first noble metal oxide and the second noble metal oxide, respectively.

That is, in the step S1' and the step S2', the unreacted material may be the precursor of the first noble metal oxide and the precursor of the second noble metal oxide, respectively, and the removing of the unreacted material may be performed by a known method. For example, the unreacted material may be removed according to a method of washing using distilled water.

In addition, the method of manufacturing a catalyst for an oxygen evolution reaction of a water electrolysis cell may further comprise: a step (S3) of repeating the step S1 to the step S2 n times (n is a natural number greater than or equal to 1), and then removing the template; and a step (S4) of performing a heat treatment process to form a heterogeneous noble metal composite including a first noble metal oxide and a second noble metal oxide different from the first noble metal oxide.

In step S3, the template may be removed using a known method. The step S3 according to an embodiment may use an alkaline solution.

When the electrode is deposited on one surface of the template according to the step S0, the step S3 may further comprise a step (S3-1) of removing the electrode present on one surface of the template.

In step S3-1, the electrode may be removed using a known method. The step S3-1 according to an embodiment may use an acid solution.

The step S3 and the step S3-1 may be performed simultaneously, or the step S3 may be performed first and then the step S3-1 may be performed, or the step S3-1 may be performed first and then the step S3 may be performed.

In the step S4, the heterogeneous noble metal composite may be formed according to the heat treatment process.

In the step S4, the heat treatment process may be performed under a temperature within a predetermined range for a predetermined time.

For example, a lower limit of the temperature of the heat treatment process may be about 350°C, 360°C, 370°C, 380°C, 390°C, 400°C, 410°C, 420°C, 430°C, 440°C, or 450°C, and an upper limit thereof may be about 600°C, 590°C, 580°C, 570°C, 560°C, 550°C, 540°C, 530°C, 520°C, 510°C, 500°C, 490°C, 480°C, 470°C, 460°C, or 450°C.

In addition, a lower limit of the time may be about 0.5 hours, 0.6 hours, 0.7 hours, 0.8 hours, 0.9 hours, or 1 hour, and an upper limit thereof may be about 4 hours, 3.5 hours, 3 hours, 2.5 hours, 2 hours, or 1 hour.

The temperature and time of the heat treatment process may each be greater than or equal to, or greater than any one lower limit among the above-described lower limits; less than or equal to, or less than any one upper limit among the above-described upper limits; or have a range of greater than or equal to, or greater than any one lower limit among the above-described lower limits and less than or equal to, or less than any one upper limit among the above-described upper limits.

The heterogeneous noble metal composite refers to a structure including different types of noble metals. The heterogeneous noble metal composite may comprise the first noble metal oxide and the second noble metal oxide different from the first noble metal oxide.

As shown on the rightmost side of FIG. 1, a heterogeneous noble metal composite in which the first noble metal oxide, the second noble metal oxide, and the first noble metal oxide are alternately disposed from the bottom may be formed.

The first noble metal oxide is a final product generated from the precursor of the first noble metal oxide. The second noble metal oxide is a final product generated from the precursor of the second noble metal oxide. As described above, "first" and "second" are merely denoted as "first" and "second", respectively, to identify different types of noble metal oxides, and do not indicate a priority between the noble metal oxides.

The heterogeneous noble metal composite has a nanowire shape, and the first noble metal oxide and the second noble metal oxide may be alternately disposed in a longitudinal direction.

By manufacturing the heterogeneous noble metal composite including the first noble metal oxide and the second noble metal oxide different from each other, an amount of a noble metal, particularly iridium (Ir), used may be reduced, and thus performance may be improved. In addition, according to the Examples and the Comparative Examples of the present disclosure, it may be confirmed that performance is improved when different heterogeneous metals are used compared to when a single metal is used.

### 3. Membrane-electrode assembly for a water electrolysis cell

According to an embodiment, a membrane-electrode assembly for a water electrolysis cell comprises a polymer electrolyte membrane, an oxygen evolution electrode positioned on one surface of the polymer electrolyte membrane; and a hydrogen evolution electrode positioned on the other surface of the polymer electrolyte membrane.

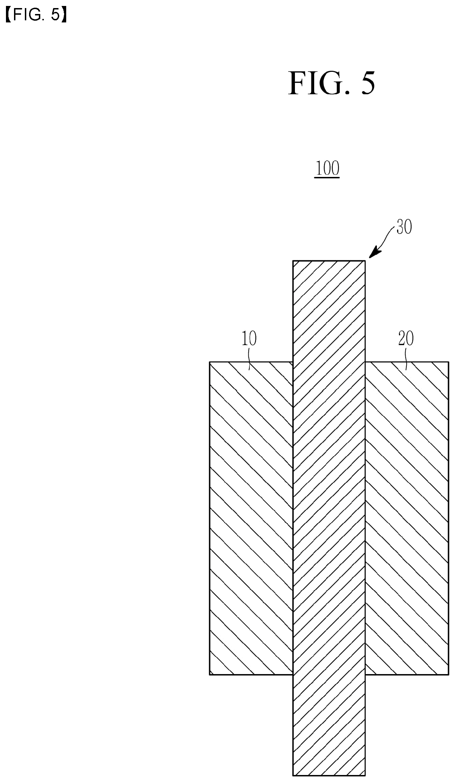

The membrane-electrode assembly for a water electrolysis cell is illustrated in FIG. 5. The membrane-electrode assembly (100) for a water electrolysis cell according to FIG. 5 comprises a polymer electrolyte membrane (30); an oxygen evolution electrode (10) positioned on one surface of the polymer electrolyte membrane; and a hydrogen evolution electrode (20) positioned on the other surface of the polymer electrolyte membrane.

Hereinafter, the oxygen evolution electrode, the hydrogen evolution electrode, and the polymer electrolyte membrane will be described in detail.

The oxygen evolution electrode refers to an electrode in which an Oxygen Evolution Reaction (OER) occurs.

The oxygen evolution electrode comprises the catalyst for an oxygen evolution reaction of a water electrolysis cell.

The catalyst for an oxygen evolution reaction of a water electrolysis cell is the same as described in the "1. Catalyst for an oxygen evolution reaction of a water electrolysis cell".

The membrane-electrode assembly for a water electrolysis cell comprises the catalyst for an oxygen evolution reaction of a water electrolysis cell including the heterogeneous noble metal composite, and thus performance may be improved. The performance improvement may be expressed as a current density measured at 1.7 V as described in the item "I-V measurement method" according to Evaluation Example 1 below.

In the membrane-electrode assembly for a water electrolysis cell, a current density measured at 1.7 V may be within a predetermined range.

For example, a lower limit of the current density may be about 2.0 A/cm², 2.05 A/cm², 2.1 A/cm², 2.15 A/cm², 2.2 A/cm², 2.25 A/cm², 2.3 A/cm², 2.35 A/cm², 2.4 A/cm², 2.45 A/cm², 2.5 A/cm², 2.55 A/cm², 2.6 A/cm², or 2.65 A/cm², and an upper limit thereof is not limited, but may be about 3.0 A/cm², 2.9 A/cm², 2.8 A/cm², 2.7 A/cm², 2.6 A/cm², 2.5 A/cm², 2.4 A/cm², 2.3 A/cm², 2.2 A/cm², 2.1 A/cm², or 2.05 A/cm².

The current density may be greater than or equal to, or greater than any one of the described lower limits; or may have a range of greater than or equal to, or greater than any one of the described lower limits and less than or equal to, or less than any one of the described upper limits.

The oxygen evolution electrode may comprise the catalyst for an oxygen evolution reaction within a predetermined range based on a total weight of the oxygen evolution electrode.

For example, a lower limit of a content of the catalyst for an oxygen evolution reaction may be about 70 wt% or 75 wt%, and an upper limit thereof may be about 90 wt% or 95 wt%.

The content of the catalyst for an oxygen evolution reaction may be greater than or equal to, or greater than any one of the described lower limits; may be less than or equal to, or less than any one of the described upper limits; or may have a range of greater than or equal to, or greater than any one of the described lower limits and less than or equal to, or less than any one of the described upper limits.

The oxygen evolution electrode may further comprise an ion conductor to improve adhesion of the catalyst and transfer hydrogen ions.

The ion conductor may comprise a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

The ion conductor according to an embodiment may have hydrogen ion conductivity.

In the ion conductor having hydrogen ion conductivity, H in the cation exchange group at a side chain terminal may be substituted with Na, K, Li, Cs, or tetrabutylammonium. In the case of substituting H with Na in the ion exchange group at the side chain terminal, NaOH is used when preparing a catalyst composition, and in the case of substituting with tetrabutylammonium, tetrabutylammonium hydroxide is used for substitution, and K, Li, or Cs may also be substituted using an appropriate compound. Since this substitution method is widely known in the art, a detailed description thereof will be omitted herein.

The content of the ion conductor may be appropriately adjusted as necessary. In an example, a lower limit of the content of the ion conductor based on 100 parts by weight of the catalyst for an oxygen evolution reaction may be about 5 parts by weight or 10 parts by weight, and an upper limit thereof may be about 30 parts by weight or 25 parts by weight.

The ion conductor may be greater than or equal to, or greater than any one of the described lower limits; be less than or equal to, or less than any one of the described upper limits; or have a range of greater than or equal to, or greater than any one of the described lower limits, and less than or equal to, or less than any one of the described upper limits, based on 100 parts by weight of the catalyst for an oxygen evolution reaction. When the ion conductor is included within the range, performance and durability are excellent.

The ion conductor may be used in the form of a single substance or a mixture, and may also be optionally used together with a non-conductive compound for the purpose of further improving adhesion to the polymer electrolyte membrane. The content of the non-conductive compound may be appropriately adjusted according to the purpose of use.

As the non-conductive compound, at least one selected from polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ETFE), ethylene chlorotrifluoro-ethylene copolymer (ECTFE), polyvinylidene fluoride, a copolymer of polyvinylidene fluoridehexafluoropropylene (PVdF-HFP), dodecylbenzenesulfonic acid, and sorbitol may be used.

The hydrogen evolution electrode refers to an electrode in which a hydrogen evolution reaction (HER) occurs.

The hydrogen evolution electrode may comprise a catalyst for a hydrogen evolution reaction. The catalyst for a hydrogen evolution reaction may comprise active particles and a support.

The active particles may comprise a noble metal.

For example, the noble metal may be a platinum-based precious metal.

As the platinum-based precious metal, platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nanotube (CNT), carbon sphere, carbon ribbon, fullerene, activated carbon, carbon nanofiber, carbon nanowire, carbon nanoball, carbon nano-horn, carbon nanocage, carbon nano ring, ordered nano-/meso-porous carbon, carbon aerogel, mesoporous carbon, graphene, stabilized carbon, activated carbon, or a combination thereof.

The oxygen evolution electrode and the hydrogen evolution electrode may comprise only a catalyst layer including a catalyst for an oxygen evolution reaction and a catalyst for a hydrogen evolution reaction, respectively, but may comprise an electrode substrate together with the catalyst layer.

In this case, the electrode substrate may serve to diffuse a fuel and an oxidant to the catalyst layer while supporting the electrode.

The electrode substrate may comprise a microporous layer, a porous diffusion layer, or a combination thereof.

The microporous layer plays a role of enhancing a reactant diffusion effect, and may generally comprise conductive powder having a small particle diameter, for example, carbon powder, carbon black, acetylene black, activated carbon, metal oxide nanowire, carbon fiber, fullerene, carbon nanotube, carbon nanowire, carbon nano-horn, or carbon nano ring.

The porous diffusion layer comprises porous titania, carbon paper, carbon cloth, carbon felt, or metal cloth (referring to a porous film consisting of a metal cloth in a fibrous state, or a cloth formed of polymer fibers having a metal film formed on a surface thereof).

The microporous layer and the porous diffusion layer may comprise known ones in addition to those exemplified above.

The electrode substrate may be one subjected to a water-repellent treatment with a fluorine-based resin, and in which case the degradation of reactant diffusion efficiency caused by water generated during operation of the water electrolysis cell may be prevented.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The polymer electrolyte membrane has an ion exchange function of moving hydrogen ions generated in the oxygen evolution electrode to the catalyst for a hydrogen evolution reaction.

A polymer electrolyte membrane according to an embodiment may comprise a porous support including a plurality of pores, and an ion conductor filling the pores of the porous support.

The porous support may be a fluorine-based support or a nano web support.

The fluorine-based support may correspond to, for example, expanded polytetrafluoroethylene (e-PTFE) having a microstructure of polymer fibrils or a microstructure in which nodes are connected to each other by fibrils. In addition, a film having a microstructure of polymer fibrils in which the nodes do not exist may also be used as the porous support.

The nano web support may be a support in which nanofibers are integrated in a non-woven fabric shape including a plurality of pores.

The ion conductor is as described above.

The ion conductor included in the polymer electrolyte membrane may be the same as or different from the ion conductor included in the oxygen evolution electrode, and, for example, the ion conductor included in the polymer electrolyte membrane may be the same as the ion conductor included in the oxygen evolution electrode.

### 4. Water Electrolysis Cell

In an embodiment, a water electrolysis cell comprises the membrane-electrode assembly for a water electrolysis cell.

Since the water electrolysis cell is the same as a known one except for including the membrane-electrode assembly according to the present application, a detailed description thereof will be omitted.

### [Mode for Invention]

Hereinafter, examples will be described in detail so that those of ordinary skill in the art to which the present disclosure pertains may easily carry them out. However, the present disclosure may be implemented in various different forms and is not limited to the examples described herein.

### Example 1-1

(a) An electrode including Ag was deposited on one surface of an AAO membrane including a substrate and a plurality of pores penetrating the substrate in a thickness direction, and the AAO membrane was connected to an electroplating apparatus.
   At this time, the diameter of the pore was 50 nm, and the length of the pore was about 900 nm.
(b) About 10 ml of a mixture of IrCl₄ from Sigma-Aldrich, which is a precursor of the first noble metal oxide, and oxalic acid from Sigma-Aldrich, which is a weak reducing agent, mixed in 50 ml of water (H₂O) at weights of 70 mg and 200 mg, respectively, was introduced to fill a portion of the AAO membrane.
(c) After adding 0.5 ml of 1M K₂CO₃ from Sigma-Aldrich as a basic compound to adjust the pH value to 10, an electroplating process was performed under a current of 0.2 mA/cm² for 1 hour to form the first noble metal oxide.
(d) The unreacted material of the precursor of the first noble metal oxide in the AAO membrane was removed by a method of washing using distilled water.
(e) About 10 ml of a mixture of RuCl₄ from Sigma-Aldrich, which is a precursor of the second noble metal oxide, and oxalic acid, which is a weak reducing agent, mixed in 50 ml of water (H₂O) at weights of 70 mg and 200 mg, respectively, was introduced to fill a portion of the AAO membrane on an upper portion of the first noble metal oxide.
(f) After adding 0.5 ml of 1M K₂CO₃ from Sigma-Aldrich as a basic compound to adjust the pH value to 10, an electroplating process was performed under a current of 0.2 mA/cm² for 1 hour to form the second noble metal oxide.
(g) The unreacted material of the precursor of the second noble metal oxide in the AAO membrane was removed by a method of washing using distilled water.

After repeating (b) to (g) n times, the template and the deposited Ag were removed using NaOH and HNO₃, respectively, and then a heat treatment process was performed at 450°C for 1 hour to form a heterogeneous noble metal composite including the first noble metal oxide and the second noble metal oxide.

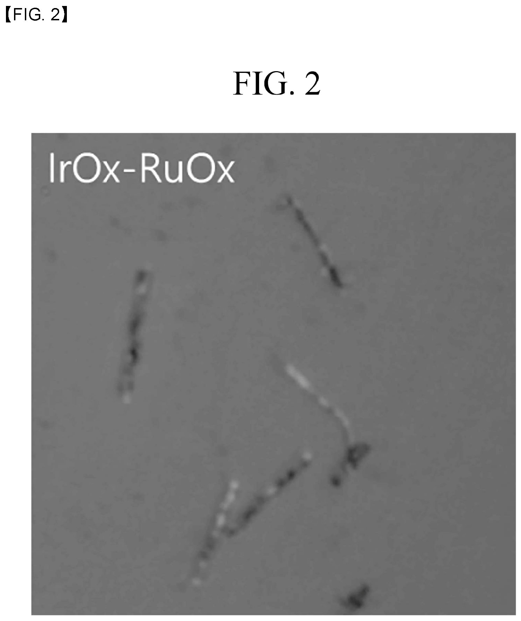

The heterogeneous noble metal composite had a nanowire shape in which the first noble metal oxide of IrO₂ and the second noble metal oxide of RuO₂ alternately existed as shown in an optical microscope photograph of FIG. 2, and as a result of measuring by photographing the heterogeneous noble metal composite using a scanning electron microscope (SEM), the length of the nanowire was about 500 nm, and the weight ratio of the first noble metal oxide (IrO₂) to the second noble metal oxide (RuO₂) in the heterogeneous noble metal composite was 60:40.

### Example 1-2

A heterogeneous noble metal composite was formed in the same method as Example 1-1, except that the electroplating process of (c) was performed for 2 hours and the electroplating process of (f) was performed for 20 minutes.

At this time, the heterogeneous noble metal composite had a nanowire shape in which the first noble metal oxide of IrO₂ and the second noble metal oxide of RuO₂ alternately existed, and as a result of measuring by photographing the heterogeneous noble metal composite using a scanning electron microscope (SEM), the length of the nanowire was about 500 nm, and the weight ratio of the first noble metal oxide (IrO₂) to the second noble metal oxide (RuO₂) in the heterogeneous noble metal composite was 80:20.

### Example 1-3

A heterogeneous noble metal composite was formed in the same method as Example 1-1, except that the electroplating process of (c) was performed for 20 minutes and the electroplating process of (f) was performed for 2 hours.

At this time, the heterogeneous noble metal composite had a nanowire shape in which the first noble metal oxide of IrO₂ and the second noble metal oxide of RuO₂ alternately existed, and as a result of measuring by photographing the heterogeneous noble metal composite using a scanning electron microscope (SEM), the length of the nanowire was about 500 nm, and the weight ratio of the first noble metal oxide (IrO₂) to the second noble metal oxide (RuO₂) in the heterogeneous noble metal composite was 20:80.

### Example 1-4

A heterogeneous noble metal composite was formed in the same method as Example 1-1, except that the amounts of the precursor of a first noble metal oxide, the precursor of a second noble metal oxide, and the weak reducing agent in (b) and (e) were used at only 2/3 of the amounts in Example 1-1, respectively.

At this time, the heterogeneous noble metal composite had a nanowire shape in which the first noble metal oxide of IrO₂ and the second noble metal oxide of RuO₂ alternately existed, and as a result of measuring by photographing the heterogeneous noble metal composite using a scanning electron microscope (SEM), the length of the nanowire was about 300 nm, and the weight ratio of the first noble metal oxide (IrO₂) to the second noble metal oxide (RuO₂) in the heterogeneous noble metal composite was 60:40.

### Example 1-5

A heterogeneous noble metal composite was formed in the same method as Example 1-1, except that the amounts of the precursor of a first noble metal oxide, the precursor of a second noble metal oxide, and the weak reducing agent in (b) and (e) were used at 1.5 times the amounts in Example 1-1, respectively.

At this time, the heterogeneous noble metal composite had a nanowire shape in which the first noble metal oxide of IrO₂ and the second noble metal oxide of RuO₂ alternately existed, and as a result of measuring by photographing the heterogeneous noble metal composite using a scanning electron microscope (SEM), the length of the nanowire was about 800 nm, and the weight ratio of the first noble metal oxide (IrO₂) to the second noble metal oxide (RuO₂) in the heterogeneous noble metal composite was 60:40.

### Example 2-1

A dual noble metal composite was formed by the same method as Example 1-1, except that SnCl₄ from Sigma-Aldrich was used as the precursor of a second noble metal oxide.

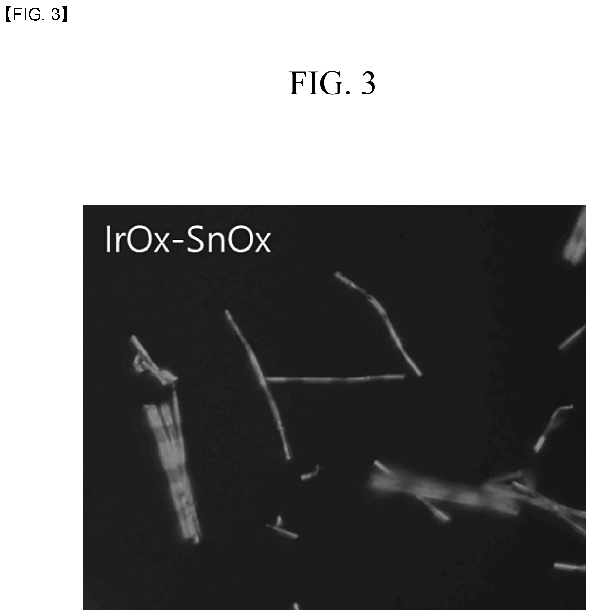

The heterogeneous noble metal composite had a nanowire shape in which the first noble metal oxide of IrO₂ and the second noble metal oxide of SnO₂ alternately existed as illustrated in the optical microscope image of FIG. 3, and as a result of measuring by imaging the heterogeneous noble metal composite using a scanning electron microscope (SEM), the length of the nanowire was about 500 nm, and the weight ratio of the first noble metal oxide (IrO₂) to the second noble metal oxide (SnO₂) in the heterogeneous noble metal composite was 70:30.

### Example 2-2

The heterogeneous noble metal composite was formed in the same method as Example 2-1, except that the electroplating process of (c) was performed for 30 minutes, and the electroplating process of (f) was performed for 2.5 hours.

The heterogeneous noble metal composite had a nanowire shape in which the first noble metal oxide of IrO₂ and the second noble metal oxide of SnO₂ alternately existed, and as a result of measuring by imaging the heterogeneous noble metal composite using a scanning electron microscope (SEM), the length of the nanowire was about 500 nm, and the weight ratio of the first noble metal oxide (IrO₂) to the second noble metal oxide (SnO₂) in the heterogeneous noble metal composite was 30:70.

### Example 2-3

The heterogeneous noble metal composite was formed in the same method as Example 2-1, except that the electroplating process of (c) was performed for 45 minutes, and the electroplating process of (f) was performed for 1.5 hours.

The heterogeneous noble metal composite had a nanowire shape in which the first noble metal oxide of IrO₂ and the second noble metal oxide of SnO₂ alternately existed, and as a result of measuring by imaging the heterogeneous noble metal composite using a scanning electron microscope (SEM), the length of the nanowire was about 500 nm, and the weight ratio of the first noble metal oxide (IrO₂) to the second noble metal oxide (SnO₂) in the heterogeneous noble metal composite was 50:50.

### Example 2-4

A heterogeneous noble metal composite was formed in the same manner as in Example 2-1, except that amounts of the precursor of the first noble metal oxide, the precursor of the second noble metal oxide, and the weak reducing agent in (b) and (e) were each used at only 2/3 of the amounts in Example 2-1.

The heterogeneous noble metal composite had a nanowire shape in which the first noble metal oxide of IrO₂ and the second noble metal oxide of SnO₂ alternately existed, and as a result of measuring by imaging the heterogeneous noble metal composite using a scanning electron microscope (SEM), the length of the nanowire was about 300 nm, and the weight ratio of the first noble metal oxide (IrO₂) and the second noble metal oxide (SnO₂) in the heterogeneous noble metal composite was 70:30.

### Example 2-5

A heterogeneous noble metal composite was formed in the same manner as in Example 2-1, except that amounts of the precursor of the first noble metal oxide, the precursor of the second noble metal oxide, and the weak reducing agent in (b) and (e) were each used at 1.5 times the amounts in Example 2-1.

The heterogeneous noble metal composite had a nanowire shape in which an IrO₂ metal oxide and an SnO₂ metal oxide alternately existed, and as a result of measuring by imaging the heterogeneous noble metal composite using a scanning electron microscope (SEM), the length of the nanowire was about 800 nm, and the weight ratio of the first noble metal oxide (IrO₂) and the second noble metal oxide (SnO₂) in the heterogeneous noble metal composite was 70:30.

### Example 3

A heterogeneous noble metal composite was formed in the same manner as in Example 1-1, except that NbCl₄ manufactured by Sigma-Aldrich was used as the precursor of the second noble metal oxide.

The heterogeneous noble metal composite had a nanowire shape in which the first noble metal oxide of IrO₂ and the second noble metal oxide of NbO₂ alternately existed, and as a result of measuring by imaging the heterogeneous noble metal composite using a scanning electron microscope (SEM), the length of the nanowire was about 500 nm, and the weight ratio of the first noble metal oxide (IrO₂) and the second noble metal oxide (NbO₂) in the heterogeneous noble metal composite was 60:40.

### Example 4

A heterogeneous noble metal composite was formed in the same manner as in Example 1-1, except that WCl₄ manufactured by Sigma-Aldrich was used as a precursor of a second noble metal oxide.

The heterogeneous noble metal composite had a nanowire shape in which a first noble metal oxide of IrO₂ and a second noble metal oxide of WO₂ alternately existed, and as a result of measuring by imaging the heterogeneous noble metal composite using a scanning electron microscope (SEM), the length of the nanowire was about 500 nm, and a weight ratio of the first noble metal oxide (IrO₂) to the second noble metal oxide (WO₂) in the heterogeneous noble metal composite was 70:30.

### Comparative Example 1

A noble metal catalyst having a nanowire shape including only an IrO₂ metal oxide was manufactured in the same manner as in Example 1-1, except that a precursor of a RuO₂ metal oxide was not introduced and only a precursor of an IrO₂ metal oxide was introduced to fill the AAO membrane.

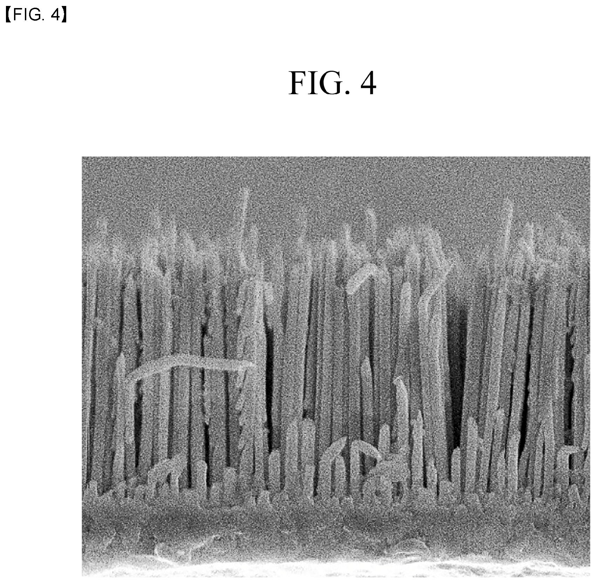

An SEM image taken before removing the template and prior to forming the noble metal catalyst is as illustrated in FIG. 4.

As a result of measuring by imaging the noble metal catalyst using a scanning electron microscope (SEM), the length of the nanowire was about 500 nm.

### Evaluation Example 1. I-V Characteristics

An electrode slurry was prepared by adding 20 parts by weight of an ion conductor dispersion and a solvent based on 100 parts by weight of the catalyst for an oxygen evolution reaction of a water electrolysis cell manufactured in Examples 1-1 to 1-5, 2-1 to 2-5, 3, and 4 and Comparative Example 1, and the electrode slurry was directly coated on a polymer electrolyte membrane (Chemours, NR212) and then dried at 90°C for 30 minutes to manufacture a membrane-electrode assembly for a water electrolysis cell.

The prepared membrane-electrode assembly for a water electrolysis cell was applied inside a unit cell designed and manufactured for a water electrolysis cell, and measured by applying a protocol for measuring voltage and resistance at a specific current from 1 mA to 20 A under conditions of a cell temperature of 80°C, a water temperature of 80°C, and a flow rate of 5 ml/min, and the measurement was stopped at 2 V.

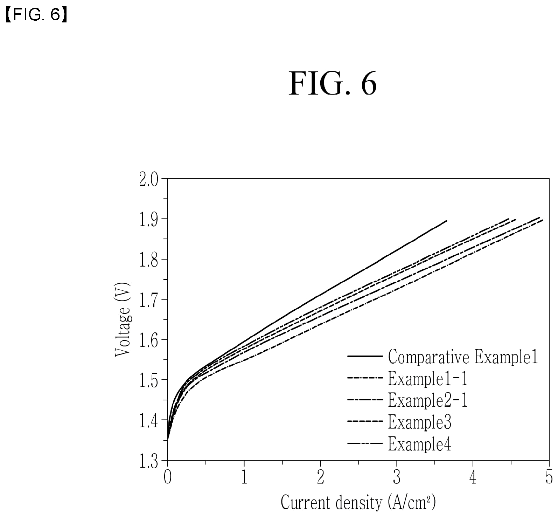

The results at this time are shown in Table 1. In addition, the results for Example 1-1, Example 2-1, and Comparative Example 1 are as illustrated in FIG. 6.

**[Table 1]**

| | Performance (A/cm²@1.7V) |
|---|---|
| Example 1-1 | 2.50 |
| Example 1-2 | 2.36 |
| Example 1-3 | 2.02 |
| Example 1-4 | 2.33 |
| Example 1-5 | 2.11 |
| Example 2-1 | 2.68 |
| Example 2-2 | 2.08 |
| Example 2-3 | 2.31 |
| Example 2-4 | 2.36 |
| Example 2-5 | 2.24 |
| Example 3 | 2.29 |
| Example 4 | 2.22 |
| Comparative Example 1 | 1.94 |

### Results

As shown in FIG. 6, it may be confirmed that the membrane-electrode assembly including the catalyst for an oxygen evolution reaction prepared according to Examples 1-1, 2-1, 3, and 4, in which different noble metal oxides are alternately arranged to form a nanowire, exhibits a higher current density at the same voltage compared to the membrane-electrode assembly including the catalyst for an oxygen evolution reaction prepared according to Comparative Example 1, in which a nanowire consisting of a single noble metal oxide is formed, thereby improving performance.

In addition, as may be confirmed in Table 1, even if the length of the nanowire and the weight ratio of the first noble metal oxide to the second noble metal oxide vary, it may be confirmed that the membrane-electrode assembly including the catalyst for an oxygen evolution reaction prepared according to Examples 1-1 to 1-5, 2-1 to 2-5, 3, and 4, in which different noble metal oxides are alternately arranged to form a nanowire, has excellent performance compared to the membrane-electrode assembly including the catalyst for an oxygen evolution reaction prepared according to Comparative Example 1, in which a nanowire consisting of a single noble metal oxide is formed.

Although preferred embodiments have been described in detail above, the scope of rights is not limited thereto, and various modifications and improvements by those skilled in the art using the basic concept defined in the following claims also fall within the scope of rights.

### <Description of symbols>

100: membrane-electrode assembly for a water electrolysis cell
10: oxygen evolution electrode
20: hydrogen evolution electrode
30: polymer electrolyte membrane

## Claims

1. A catalyst for an oxygen evolution reaction of a water electrolysis cell comprising a heterogeneous noble metal composite comprising a first noble metal oxide and a second noble metal oxide different from the first noble metal oxide,
wherein the heterogeneous noble metal composite has a nanowire shape.

2. The catalyst for an oxygen evolution reaction of a water electrolysis cell of claim 1, wherein
the first noble metal oxide is IrOₓ (x is an integer of 1 to 3).

3. The catalyst for an oxygen evolution reaction of a water electrolysis cell of claim 1, wherein
the second noble metal oxide is MOₓ (wherein M includes Ru, Pt, Sn, Se, Sb, Ta, Te, Nb, W, Zn, Au, or a combination thereof, and x is an integer of 1 to 3).

4. The catalyst for an oxygen evolution reaction of a water electrolysis cell of claim 1, wherein
a length of the nanowire is in a range of 100 nm to 1,000 nm.

5. The catalyst for an oxygen evolution reaction of a water electrolysis cell of claim 1, wherein
the first noble metal oxide is included in a range of 10 wt% to 90 wt% based on a total weight of the heterogeneous noble metal composite.

6. The catalyst for an oxygen evolution reaction of a water electrolysis cell of claim 1, wherein
in the heterogeneous noble metal composite,
a weight ratio of the first noble metal oxide to the second noble metal oxide is in a range of 1:9 to 9:1.

7. The catalyst for an oxygen evolution reaction of a water electrolysis cell of claim 1, wherein
the heterogeneous noble metal composite comprises
a first noble metal oxide layer including the first noble metal oxide, and a second noble metal oxide layer including the second noble metal oxide.

8. The catalyst for an oxygen evolution reaction of a water electrolysis cell of claim 7, wherein
in the heterogeneous noble metal composite,
the first noble metal oxide layer and the second noble metal oxide layer are alternately disposed in a longitudinal direction of the nanowire.

9. The catalyst for an oxygen evolution reaction of a water electrolysis cell of claim 8, wherein
the first noble metal oxide layer and the second noble metal oxide layer are each independently a minimum repeating unit, and
the heterogeneous noble metal composite has greater than or equal to 2 repeating units of the first noble metal oxide layer, and has greater than or equal to 1 repeating unit of the second noble metal oxide layer.

10. The catalyst for an oxygen evolution reaction of a water electrolysis cell of claim 9, wherein
the heterogeneous noble metal composite comprises 2 to 10 first noble metal oxide layers, and
comprises 1 to 9 second noble metal oxide layers.

11. The catalyst for an oxygen evolution reaction of a water electrolysis cell of claim 9, wherein
a length of the first noble metal oxide layer is in a range of greater than or equal to 10 nm and less than 1,000 nm, and
a length of the second noble metal oxide layer is in a range of greater than or equal to 10 nm and less than 1,000 nm.

12. The catalyst for an oxygen evolution reaction of a water electrolysis cell of claim 9, wherein
a ratio of a length of the first noble metal oxide layer to a length of the second noble metal oxide layer is in a range of 1:0.1 to 1:10.

13. A method of manufacturing a catalyst for an oxygen evolution reaction of a water electrolysis cell comprising:
introducing a precursor of a first noble metal oxide to fill a portion of a template and performing an electroplating process (S1); and
introducing a precursor of a second noble metal oxide different from the precursor of the first noble metal oxide to fill a portion of the template and performing an electroplating process (S2);
wherein the step S1, the step S2, or both of the two steps are repeated n times (n is a natural number greater than or equal to 1).

14. The method of manufacturing a catalyst for an oxygen evolution reaction of a water electrolysis cell of claim 13, wherein
the template is an AAO membrane (anodic aluminum oxide membrane) comprising a substrate and a plurality of pores penetrating the substrate in a thickness direction, and
the precursor of the first noble metal oxide and the precursor of the second noble metal oxide are alternately filled into the pores.

15. The method of manufacturing a catalyst for an oxygen evolution reaction of a water electrolysis cell of claim 13, wherein
the electroplating process is performed under a current in a range of 0.05 mA/cm² to 2.0 mA/cm² for 10 minutes to 300 minutes.

16. The method of manufacturing a catalyst for an oxygen evolution reaction of a water electrolysis cell of claim 13, further comprising:
after repeating the step S1 to the step S2 n times (n is a natural number greater than or equal to 1),
removing the template (S3); and
performing a heat treatment process to form a heterogeneous noble metal composite including a first noble metal oxide and a second noble metal oxide different from the first noble metal oxide (S4).

17. The method of manufacturing a catalyst for an oxygen evolution reaction of a water electrolysis cell of claim 16, wherein
the step S3 uses an alkaline solution.

18. A membrane-electrode assembly for a water electrolysis cell comprising:
a polymer electrolyte membrane;
an oxygen evolution electrode positioned on one surface of the polymer electrolyte membrane, and including the catalyst for an oxygen evolution reaction for water electrolysis according to claim 1; and
a hydrogen evolution electrode positioned on the other surface of the polymer electrolyte membrane.

19. The membrane-electrode assembly for a water electrolysis cell of claim 18, wherein
a current density measured at 1.7 V under conditions of a cell temperature of 80°C, a water temperature of 80°C, and a flow rate of 5 ml/min is greater than or equal to 2.0 A/cm².

20. A water electrolysis cell comprising the membrane-electrode assembly according to claim 18.
